# EUROPEAN PATENT SPECIFICATION

(11) **EP 1 626 017 B1**
(45) Date of publication and mention of the grant of the patent: **16.04.2008**
(21) Application number: 05076858.9
(22) Date of filing: 10.08.2005
(51) Int. Cl.: B65G 57/30, B65G 57/20, B65G 59/06

(54) **Device for stacking and unstacking crates**
Vorrichtung zum Stapeln und Entstapeln von Kästen
Dispositif pour l'empilage et le dépilage de caisses

(30) Priority: 10.08.2004 NL 1026819
(43) Date of publication of application: 15.02.2006
(73) Proprietor: Systemate Group B.V., 3281 NC Numansdorp (NL)
(72) Inventor: Blokland, Cornelis Jacob, 3248 XC Melissant (NL); Middelkoop, Gerrit, 3291 LN Strijen (NL)
(74) Representative: Ferguson, Alexander

(56) References cited:
- EP-A- 0 354 657
- DE-A1- 2 210 383
- FR-A- 2 623 472
- US-A- 3 869 048
- US-A- 4 221 519
- US-A- 4 252 484

## Description

The invention relates to a device for stacking and/or unstacking crates.

The invention particularly relates to a stacking device for stacking and/or unstacking elongated crates.

Such stacking devices are already known and usually have a conveyor belt on which crates are supplied and discharged in line from and towards a stacking position, and a set of grippers for lifting the crates from and towards the conveyor belt. During stacking the grippers each time lift a crate from the conveyor belt after which it is placed on a next crate supplied on the conveyor belt. In this case a stack of crates is formed that is each time supplemented from the bottom up. When unstacking, the bottom crate of the stack of crates is each time placed on the conveyor belt after which the stack of crates is lifted by the grippers at the penultimate bottom crate from the bottom crate so that this one can be discharged. A drawback of such a stacking device is that the stack of (empty) crates obtained takes up relatively much space.

EP-A-0.354.657 discloses an apparatus for unstacking a stack of cross-nested baskets from the top side of the stack.

US Patent 4,252,484 discloses a device for at a first position unstacking elongated trays from a stack of cross-wise alternately stacked trays, comprising a station for at the bottom side of the stack unstacking trays and conveying means for discharging trays in an aligned oriented condition.

It is an object of the invention to provide a device with which a more compact stack of crates can be stacked and/or unstacked.

It is a further object of the invention to provide an alternative stacking device for stacking and/or unstacking crates.

The invention provides a device according to claim 1. When the upright walls at the longitudinal side of the elongated crates have a lowering as a result of which the crates nest cross-wise, the cross-wise alternate stacking may result in a stack of crates that is more compact than would be the case when the crates are stacked in the same direction. The station is able to stack the crates in the orientation in which they are supplied to the stacking station.

A stack of crates can be built up and broken down from the bottom up if the station comprises first crate carrying means for in the station carrying crates supplied and/or to be discharged by the conveying means, and second crate carrying means which are movable from and towards the first crate carrying means in a direction that is transverse to a supply and discharge direction of the conveying means.

Preferably the station comprises third crate carrying means for in direction carrying a crate at at least the distance equalling the height of one crate wall with respect to a crate carried by the first crate carrying means, wherein the second and third carrying means preferably are adapted for transferring crates one to the other, wherein preferably the second crate carrying means can be moved up and down from and towards the first and third crate carrying means. An advantage thereof is that the second crate carrying means can be relieved by the third crate carrying means.

When the second crate carrying means comprise first and second engagement means for engagement along longitudinal sides and transverse sides, respectively, on both sides of a crate, wherein the second and third engagement means preferably are formed on a same body, the first engagement means and the second engagement means can each be dimensioned such that optimal and stable abutment along the longitudinal sides and transverse sides, respectively, is possible.

In addition the third crate carrying means may comprise third and fourth engagement means for engagement along longitudinal and transverse sides, respectively, of a crate.

In a simple embodiment the first and/or second and/or third and/or fourth engagement means comprise a support for abutting a circumferential edge along the bottom of a crate.

Preferably the support is angular having a first and a second wall that merges therewith, which are at a first angle of 90-110 degrees, wherein in the crate carrying condition of the angular support the first wall abuts a bottom of a crate and the second wall is substantially opposite a side wall of the crate. An advantage thereof is that due to the extended position of the second wall with respect to the side wall of the crate the second wall is able to properly guide a crate towards the first wall and that the crate can be enclosed between the second walls of angular supports on both sides of a crate.
The guiding action of the second wall is enhanced when the second wall at a side opposite the first wall merges into a third wall, wherein with respect to the first wall the third wall is at a second angle that is larger than the first angle.

Preferably the third engagement means comprise at least two spaced apart supports for abutting along the same longitudinal side of a crate, wherein the largest mutual distance between the supports is larger than the width of a crate and is smaller than the length of the crate. An advantage thereof is that the supports due to this mutual distance are able to engage unhindered onto the longitudinal side of a crate when thereon or thereunderneath another crate is situated cross-wise, wherein due to the spacing over the longitudinal side a stable position of the crate in longitudinal direction is effected.

In addition the fourth engagement means may comprise at least two spaced apart supports for abutting along the same transverse side of a crate, wherein the largest mutual distance between the supports is smaller than the width of the crate, so that the fourth supports are able to engage unhindered onto a transverse side of a crate when another crate is situated cross-wise above it or below it.

The second crate carrying means are able to pass along a crate when the second crate carrying means comprise first positioning means for independent from each other alternately in an engagement direction transverse to the stacking/unstacking direction moving the first and second engagement means, respectively, from and towards a position enabling to carry a crate.

In a further development the device comprises a frame, wherein the second crate carrying means are disposed at a lifting frame that is movable in stacking/unstacking direction with respect to the frame, wherein the first and second engagement means are provided at first arms that are attached to the lifting frame on either side with respect to the stacking/unstacking position of the device, such that the first and second engagement means, respectively, are each able to mutually engage on either side of a crate onto the longitudinal sides and transverse sides, respectively, of a crate.

In a simple embodiment the first and second engagement means are attached to the first arms in pairs and in a stepped manner. Moreover the mutual hindrance of the first and second engagement means when engaging a crate from below is limited due to the stepped position.

Preferably the device comprises first drive means for moving the lifting frame with respect to the frame.

The movement of the lifting frame can be accurate with respect to the second engagement means when the first drive means comprise a stepping motor.

Crates are able to pass the third crate carrying means in lifting direction when the third crate carrying means comprise second and third positioning means for independent from each other alternately moving the third and fourth engagement means, respectively, in an engagement direction transverse to the stacking/unstacking direction from and towards a position enabling to carry crates.

In a simple embodiment the second and third positioning means comprise second and third arms to which at an end the third and fourth engagement means, respectively, have been provided, wherein at an end opposite the engagement means the second and third arms are connected to the frame so as to swing for swinging transverse to the supply and discharge direction.

Preferably the device comprises second and third drive means for the second and third arms, so that the swinging motion of the second and third arms can be carried out independent from one another for alternately taking over a stack of crates of which the lowermost crate is situated in longitudinal direction or latitudinal direction with respect to the conveyance direction.

When the second and third drive means comprise a pneumatic or hydraulic drive cylinder, the engagement means will be easily movable between a position enabling to carry crates and an inoperative position.

The risk of a stack in the stack of crates in the device collapsing is limited when the station comprises first pillar guides extending in stacking/unstacking direction for abutting on and substantially around a stack of crates if present in the station.

The mutual distance between the pillar guides is increased when the first pillar guides are positioned for abutment along a transverse side of a crate in a stack of crates in the station. Due to this, with respect to a stack of crates, as wide as possible mutual distance, the stack of crates can easily be slid in and out of the station and during stacking be properly guided.

In a simple embodiment the first pillar guides comprise elongated bars extending in the stack direction.

For a proper circumferential enclosure of a stack of crates in the device at least a number of first pillar guides can be swingable or movable from and towards an abutting position.

Preferably the device comprises a door which at a supply and discharge side of the device gives access to the station, wherein preferably at least a number of first pillar guides have been disposed at the door. An advantage thereof is that the station can be safely closed off by means of the door whereas in addition simultaneously a number of first pillar guides are brought into an abuttable position.

Preferably the conveying means comprise a conveyance path having a first and second stopper for at a first position stopping a crate supplied in the longitudinal direction or transversal direction, respectively, over the conveyance path. An advantage thereof is that while the conveyance path leaves the orientation of the crate situated thereon unchanged, the stoppers effect a proper positioning of the crates at the first position.

In a simple embodiment the first stopper is provided by the first pillar guides provided at the door of the device.

Collisions between a crate at the first position and other supplied crates on the conveyance path are avoided when the conveyance path comprises a third stopper for at a first stand-by position spaced apart from the first position stopping a crate supplied in longitudinal direction or transversal direction over the conveyance path.

Collisions of crates against crates at the stand-by position are avoided when the conveyance path comprises a fourth stopper for stopping a supplied crate at a buffer position spaced apart from the first stand-by position.

The risk of the first and second engagement means not properly engaging the second crate carrying means is reduced when the device comprises centring means for centring crates transverse to the supply direction, which crates are supplied to the station in longitudinal direction or transverse direction, respectively, and which crates are on the conveyance path in line with the position enabling to carry crates of the first and/or second crate carrying means.

Preferably the centring means comprise second pillar guides for abutting opposite side walls of a crate, wherein the second pillar guides are situated parallel to the supply direction. An advantage thereof is that due to the parallel positioning of the second pillar guides the crates can easily be oriented in longitudinal direction or transversal direction on the conveyance path.

Alternatively or in addition the second pillar guides are provided for abutting a side wall at the longitudinal side of a crate, wherein the centring means further comprise third pillar guides for abutting opposite side walls at the transverse side of a crate, wherein the third pillar guides are situated parallel to the supply direction.

The supplied crates can be forcefully brought into the correct orientation on the conveyor belt when the second and/or third pillar guides are movable transverse to the supply direction for bringing the second and/or third pillar guides in abuttable position.

Alternatively or additionally the second pillar guides are movable transverse to the supply direction for bringing the second pillar guides in abuttable position, wherein the third pillar guides are fixedly connected to the frame.

In a simple embodiment the conveyance path provides the first crate carrying means.

For the purpose of driving the conveyance path may comprise a conveyor belt.

For at first providing crates supplied to the station in longitudinal direction or transversal direction, the conveying means can be provided with a crate orienter for per stack supplying crates alternately in longitudinal direction or transversal direction.

In an efficient embodiment the conveying means comprise an ejector for ejecting incorrectly oriented crates from the conveying device and preferably returning them reoriented. In that way crates may therefore circulate until they have achieved the correct orientation to be stacked.

The stacking and unstacking capacity of the device can be increased when the stacking station is adapted for the at the first position and at an adjacent second position parallel stacking and/or unstacking of two stacks of cross-wise and alternately stacked crates.

A proper positioning of the crates at the second position is effected when the device comprises a fifth stopper for at the second position stopping a crate supplied in the transversal direction over the conveyance path.

Between two crates supplied simultaneously in transversal direction to the first and second stacking position an intermediate space can be created for a proper action of the second stopper when the device comprises a sixth stopper for at a second stand-by position spaced apart from the first stand-by position stopping a crate supplied in longitudinal direction or transversal direction over the conveyance path.

In a simple embodiment the first and/or second and/or third and/or fourth and/or fifth and/or sixth stopper comprise an angular profile for abutting a circumferential edge along the bottom of a crate, wherein the profile is movable with respect to the conveyor belt from and towards an abuttable position.

For an automated operation of the device it may be provided with an operating device for operating the drive means of the device in a controlled manner.

The invention will be elucidated on the basis of a number of exemplary embodiments shown in the attached drawings, in which:
Figure 1 shows a schematic view in perspective of a device according to the invention;
Figure 2 shows a stack of crates as it will be stacked or unstacked by the device according to figure 1;
Figures 3 and 3A show a view in perspective and a top view (partially in cross-section), respectively, of a part of the inside of the device according to figure 1; and
Figures 4A-4K show a highly schematic view of the consecutive treatment steps as carried out by the device according to figure 1.

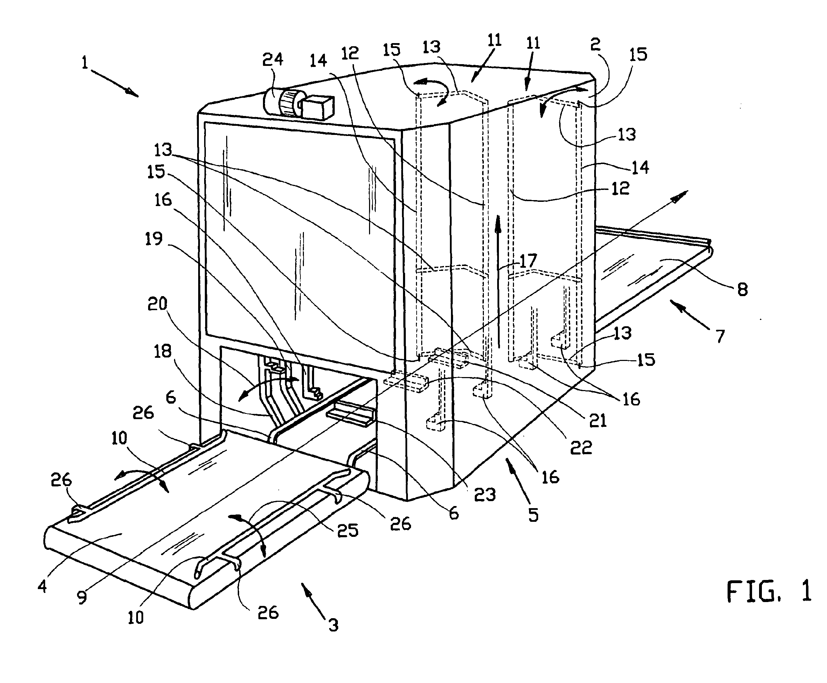

Figure 1 schematically shows a view in perspective of a device according to the invention. The device 1 is suitable for both simultaneously stacking supplied elongated crates into two stacks of cross-wise and alternately stacked crates, and simultaneously unstacking two stacks of cross-wise and alternately stacked crates.

The device 1 has a supply and discharge section 3 for individual crates, a stacking and unstacking section or stacking station 5 and a supply and discharge section 7 for stacks of crates. Arrow 9 shows the passage direction of crates and when they are stacked in the stacking and unstacking section 5 into a stack of crates. The supply and discharge section 3 has a first conveyor belt 4 which in passage direction 9 is in line with two parallel second conveyor belts 6 in the stacking and unstacking section 5. In the passage direction 9 the second conveyor belts 6 merge into a third conveyor belt 8 which is situated in the supply and discharge section 7 for stacks of crates.

In the stacking and unstacking section 5 a total of eight (only five are shown) lifting arms 16 are situated in pairs and opposite each other on both sides of the second conveyor belts 6, which lifting arms can be moved up and down in a frame 2 in a lifting direction as shown with arrow 17 in vertical direction transverse to the passage direction 9. The motion of the lifting arms 16 is actuated with a stepping motor 24 that is operatively connected to the lifting arms and the frame 2, for instance by means of a gear rack or chain transmission. The lifting arms 16 are able to simultaneously engage under two crates in order to lift them from and towards the second conveyor belts 6.

On both sides of the second conveyor belts 6 longitudinal supports 18 and transversal supports 19 are hinged to the frame 2, which in a direction as indicated by arrow 20 are able to hinge transverse to the passage direction 9 between two ultimate positions.

Between the second conveyor belts 6, considered in opposite direction of the passage direction 9, a first stopper 21, a second stopper 22 and a third stopper 23 are situated that are movable in the lifting direction 17 in order to come into contact with a longitudinal side or transverse side of a supplied crate in order to position it with respect to the lifting arms 16.

At the side of the supply and discharge section 7 the stacking and unstacking section 5 has two doors 11. The doors 11 each have a pillar guide 9 extending in the lifting direction 17. The pillar guide 9 of each door 11 is connected by means of arms 13 to bars 14 that are suspended from the frame 2 by means of hinges 15 so as to hinge. Due to the hinges 15 the pillar guides 9 are swingable from and towards a position enabling to guide crates as shown in figure 1, wherein they abut the transverse walls of a stack of alternately stacked crates. In opened position of the doors 11 it is possible to pass a stack of crates on the third conveyor belt 7 to the stacking and unstacking section 9 of the device 1.

On both sides of the first conveyor belt 4 two pillar guides 10 are situated parallel to the passage direction 9 which pillar guides are movable transverse to the passage direction 9 by means of hinging arms 26 in a direction according to arrow 25. The motion of the hinging arms 26 is in this case actuated by a drive that is not shown, for instance a pneumatic or hydraulic cylinder. By means of pillar guides 26 the supplied crates are positioned straight and centred on the first conveyor belt 4 for a correct engagement by the lifting arms 16.

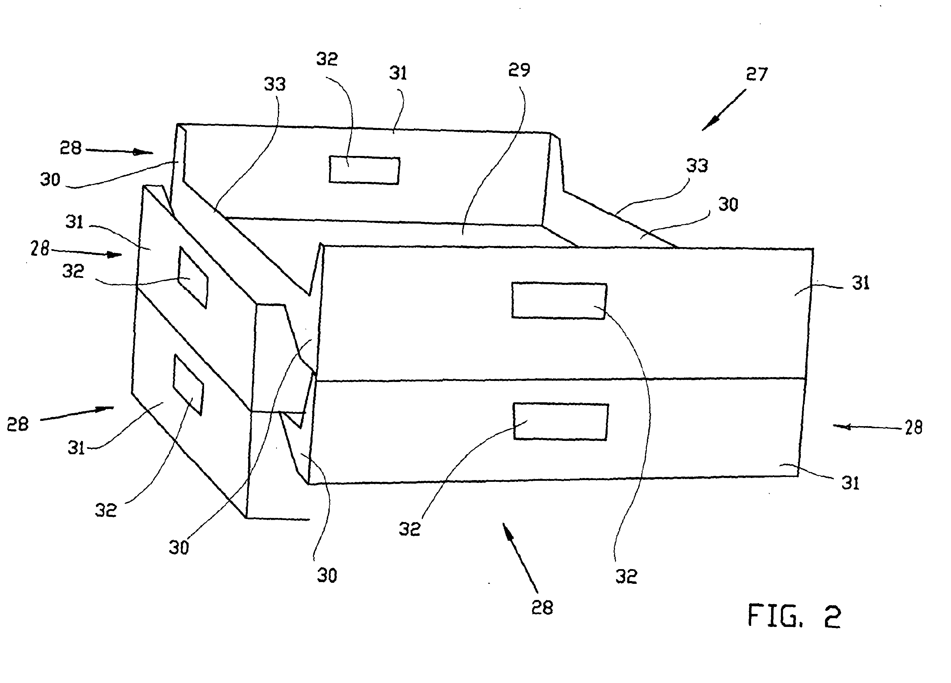

Figure 2 shows a stack of crates 27 as stacked and unstacked in the stacking and unstacking section 5 of the device 1. Each crate 28 has a longitudinal bottom 29 having two opposite longitudinal walls 30 and two shorter opposite transverse walls 31. In the transverse walls 31 there is an opening 32 by which the crate can be engaged. The longitudinal walls 30 of the crates 28 have a lowering 33 as a result of which the height of the longitudinal walls 30 at the location of the lowering 33 is half the height of the transverse walls 31. In alternately stacked condition the crates 28 partially nest, as a result of which both the transverse walls 31 and the longitudinal walls 30 rest on each other. As a result the stack of crates 27 is more stable and spatially more compact than would be the case when the crates 28 would be stacked in the same direction wherein only the short transverse walls 31 rest on each other.

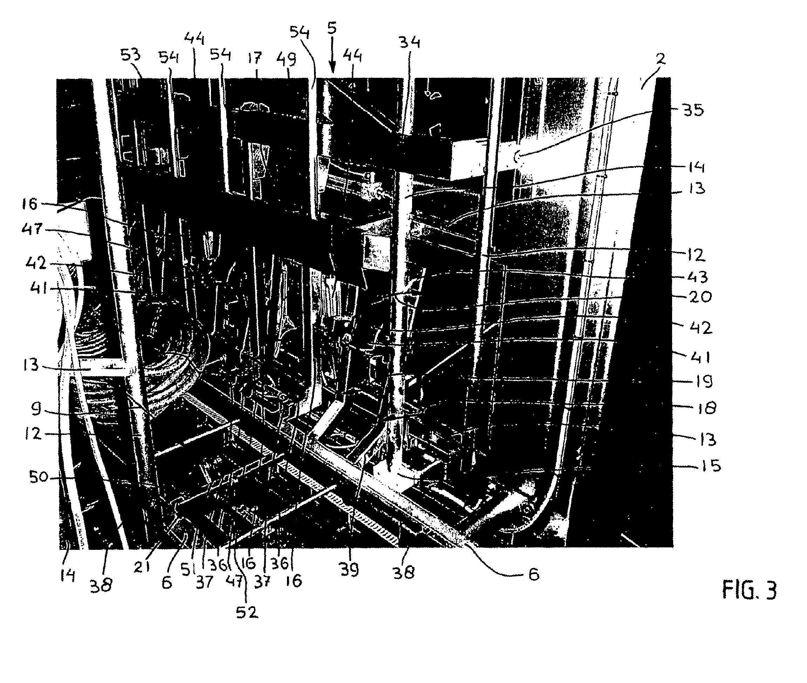

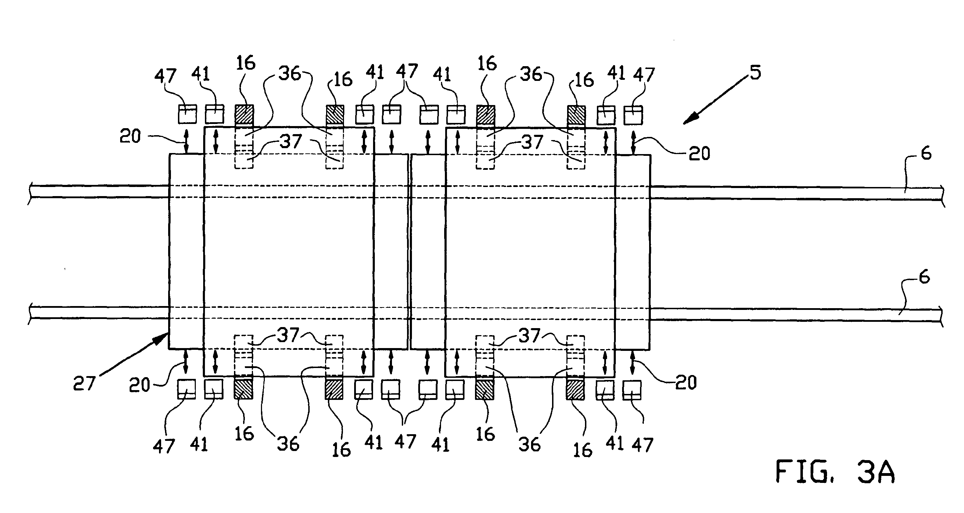

Figure 3 shows the stacking and unstacking section 5 of the device 1 in more detail. Figure 3A schematically shows the lowermost part of the stacking and unstacking section 5 in top view, wherein the lifting arms 16 are shown in cross-section. In the frame 2 of the device 1 a lifting frame 34 is situated which by means of rollers 35 can be moved up and down in the lifting direction 17 only. The lifting arms 16 have been attached to the lifting frame 34 so that they can move along with the lifting frame 34. Each free end of the lifting arms 16 has an upper angular profile 36 and a lower angular profile 37 that are attached to the lifting arms 16 in a stepped manner. The upper angular profiles 36 and the lower angular profiles 37 of opposite lifting arms 16 are positioned one to the other transverse to the passage direction 9 such that when the lifting arms 16 engage under a crate 28 the upper angular profiles 36 abut the bottom 29 and the transverse walls 31 of a crate 28 supplied in transversal direction, and the lower angular profiles 37 abut the bottom 29 and the longitudinal walls 30 of a crate 28 supplied in longitudinal direction.

The two second conveyor belts 6 are each situated on an elongated J-profile 38 at the frame 2. The in total six hinging longitudinal supports 18 each hinge per threesome with one of the two J-profiles 38. The longitudinal supports 18 have an arm 39 having an angular profile 41 thereon which is provided with a turned portion 42. The angular profile 41 is suitable for abutting below the bottom 29 and against a longitudinal wall 30 of a crate 28 supplied in longitudinal direction. The mutual distance in supply direction 9 between the angular profiles 41 is such that they are able to abut the longitudinal walls 30 and the bottom 29 of the part of a crate that protrudes transversely to the stacking direction 17 with respect to a crate stacked transversely underneath it.

The arms 39 of the longitudinal supports 18 are fixedly interconnected on both sides of the second conveyor belts 6 by a connecting bar 43. A pneumatic cylinder 44 connects the connecting bar 43 to the frame 2. Due to actuation by the pneumatic cylinder 44 the angular profiles 41 of the longitudinal supports 16 are movable according to arrow 20 between an inactive position beyond the lifting frame 34 and an active position within the lifting frame 34 wherein a crate 28 supplied in longitudinal direction can be carried. The middle of the three longitudinal supports 18 then simultaneously carries two crates.

On both sides of the second conveyor belts 6 a total of eight transversal supports 19 are situated between the lifting arms 16 and the longitudinal supports 18, which transversal supports just like the longitudinal supports 18 are hinged to one of the two J-profiles 38. The mutual distance in supply direction 9 between the angular profiles 47 is such that per pair they are able to abut as widely as possible against the transverse walls 31 and the bottom 20 of a crate 28.

The transversal supports 19 have an arm 45 having an angular profile 47 thereon for abutting below the bottom and against the transverse wall 31 of a crate 28 supplied in transversal direction. The arms 45 are fixedly interconnected per pair engaging below the same crate by a connecting bar that is not shown and which via a pneumatic cylinder 49 is connected to the frame 2 so that the angular profiles 41 per pair are able to move simultaneously from and towards a crate. Just like the longitudinal supports 18, the angular profiles 47 of the transversal supports 16 are movable according to arrow 20 by operating the pneumatic cylinder 49 between an inactive position beyond the lifting frame 34 and an active position within the lifting frame 34 wherein however a crate 28 supplied in the transversal direction can be carried.

The longitudinal supports 18 and the transversal supports 19 are dimensioned such that they are able to support a crate along the longitudinal side or transverse side, respectively, at approximately two crate heights with respect to the second conveyor belts 6, and the motion of the lifting frame 34 is dimensioned such that the upper and lower angular profiles 36 and 37 of the lifting arms 16 are able to move between a lowermost position below the bottom 29 of a crate 28 situated on the second conveyor belts 6, and an uppermost position wherein the upper and lower angular profiles 36 and 37 are above the angular profiles 41, 47 of the longitudinal and transversal supports 18, 19 as a result of which it is possible to lift a crate 28 situated in the longitudinal or transversal direction on the second conveyor belts 6 therefrom by means of the lifting arms 16 and place them in the angular profiles of the activated longitudinal or transversal supports 18, 19. Due to independent operation of the longitudinal supports 18 and the transversal supports 19 it is possible in this case to activate the correct supports 18, 19 depending each time on the orientation of a crate 28.

The first stopper 21, the second stopper 22 and third stopper 23 are situated between the two second conveyor belts 6. Each stopper 21, 22, 23 has an angular profile 50 which by means of a hinging arm 51 and a pneumatic cylinder 52 is movable from an inactive position as shown in figure 3 towards an active position wherein the stoppers are able to engage onto a longitudinal or transverse wall 30, 31 of a supplied crate 28.

A ruler 53 is situated within the lifting frame, which ruler is fixedly connected to the frame 2. The ruler 53 together with pillar guides 54 at the ruler 53 provide pillar guiding for stacks of crates 27 in the stacking and unstacking section 5 of the device 1.

The device is furthermore provided with an electronic operating unit that is not shown for the controlled and co-ordinated actuation of the conveyor belts 4, 6, 8, motors 24, pillar guides 10, 14, stoppers 21, 22, 23, 59, 60, longitudinal supports 18 and transversal supports 19.

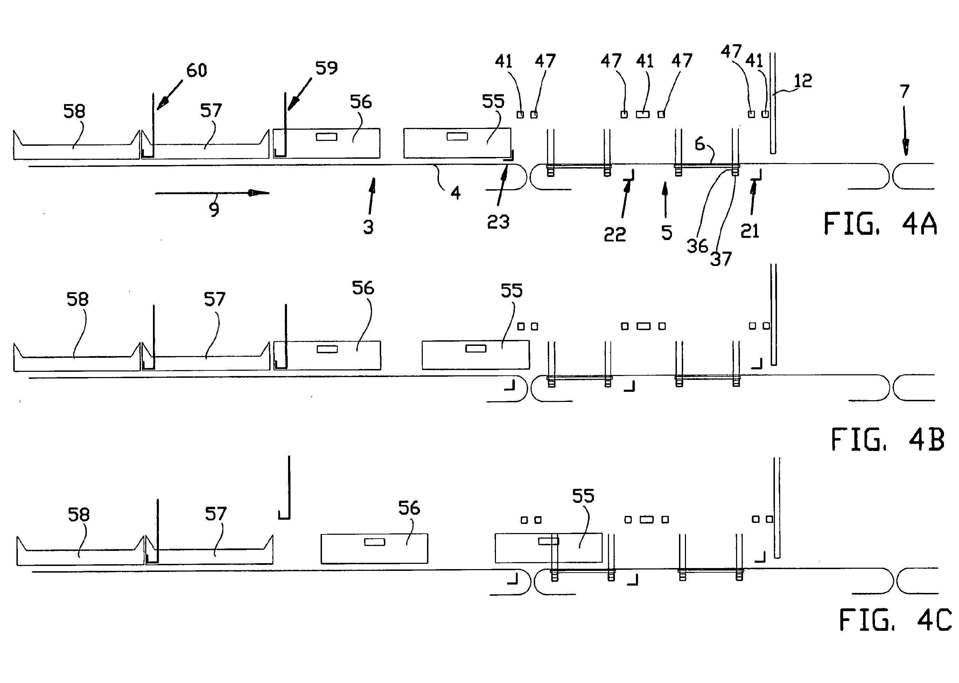

Figures 4A-K highly schematically show a side view of a stacking cycle of two crates 55 and 56 supplied in transverse direction and two crates 57 and 58 supplied in longitudinal direction which are stacked in the stacking section 5 into two parallel stacks of crates as shown in figure 2.

In figure 4A a number of crates are placed in a row on the first conveyor belt 4, which crates with respect to the supply direction 9 are always oriented per pair in the longitudinal direction or in the transversal direction. The lifting arms 16 are in the lowermost position as a result of which the angular profiles 36, 37 are situated below the second conveyor belts 6. The first and second stopper 21, 22 are in the inactive position, the third stopper 23 is in the active position. Above the first conveyor belt there are furthermore a fourth and fifth stopper 59, 60 for selectively retaining supplied crates at a stand-by position and a buffer position, respectively, at the first conveyor belt 4. The longitudinal supports 18 and latitudinal supports 19 are inactive.

Subsequently, as shown in figure 4B, the third stopper 23 is moved into an inactive position as a result of which the first crate 55 starts to move in transverse direction towards the first stopper 21 that is simultaneously brought into the active position.

After deactivating the third stopper 23 the fourth stopper 59 is deactivated as a result of which the second crate 56 also moves in the direction of the stacking section 55, as shown in figure 4C. The fifth stopper 60 ensures that the third and fourth crate 57, 58 remain in their places here.

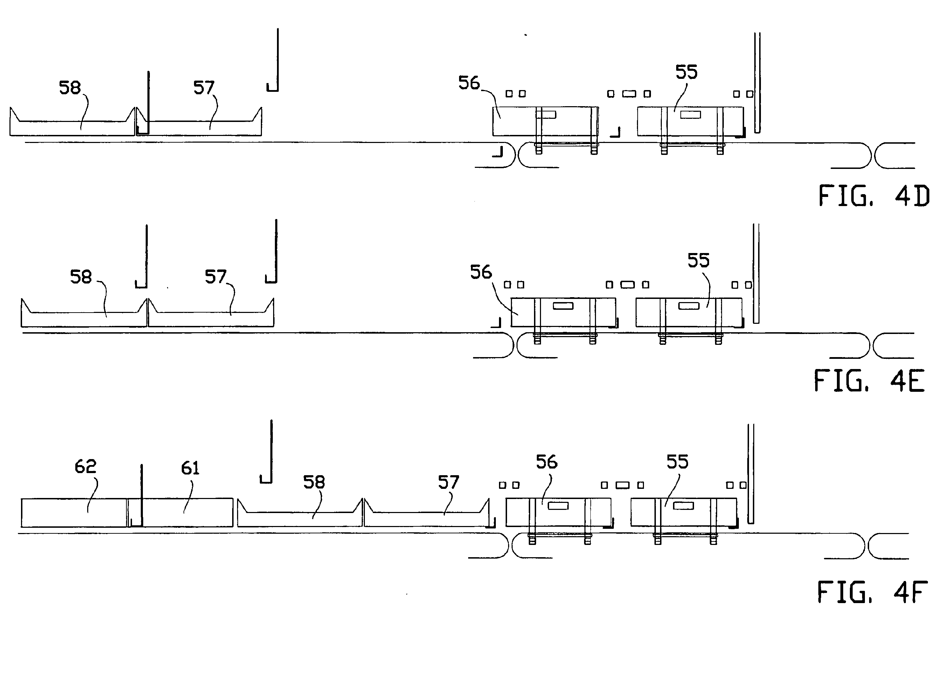

After the first crate 55 has passed the second stopper, the second stopper 22 moves to an active position as shown in figure 4D, as a result of which the second crate 56 will abut the second stopper 22 as shown in figure 4E. After deactivation the fifth stopper 60 simultaneously ensures that the two crates 57, 58 will be stand-by in longitudinal direction against the activated third stopper 23, after which they will be separated by the fifth stopper 60 from crates 61, 62 supplied further as shown in figure 4F.

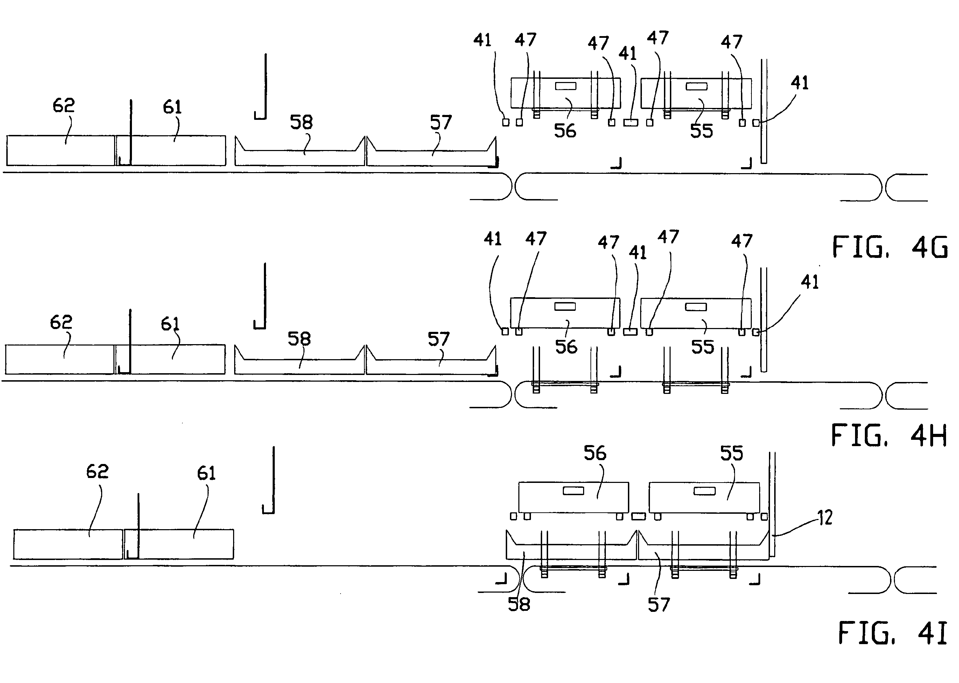

In figure 4G the lifting arms 16 move from their lowermost position to their uppermost position as a result of which the first and second crate 55, 56 are simultaneously lifted above the angular profiles 41 and 47 of the longitudinal supports 18 and transversal supports 19, after which the transversal supports 19 are hinged from their inactive to their second active position.

By moving the lifting arms 16 to their lowermost position again as shown in figure 4H, the first and second crate 55, 56 are taken over by the activated transversal supports 19 after which due to deactivation of the third stopper 23 the third and fourth crate 57, 58, after they have been pushed into the middle of the first conveyor belt 4 by the movable first pillar guides 10, are supplied in longitudinal direction in the stacking section 5 of the device 1 as shown in figure 4I. In addition they can go through. The third and fourth crate 57, 58 will abut each other with their transverse walls wherein the pillar guides 1 2 of the doors 11 function as stopper for the crates 57, 58.

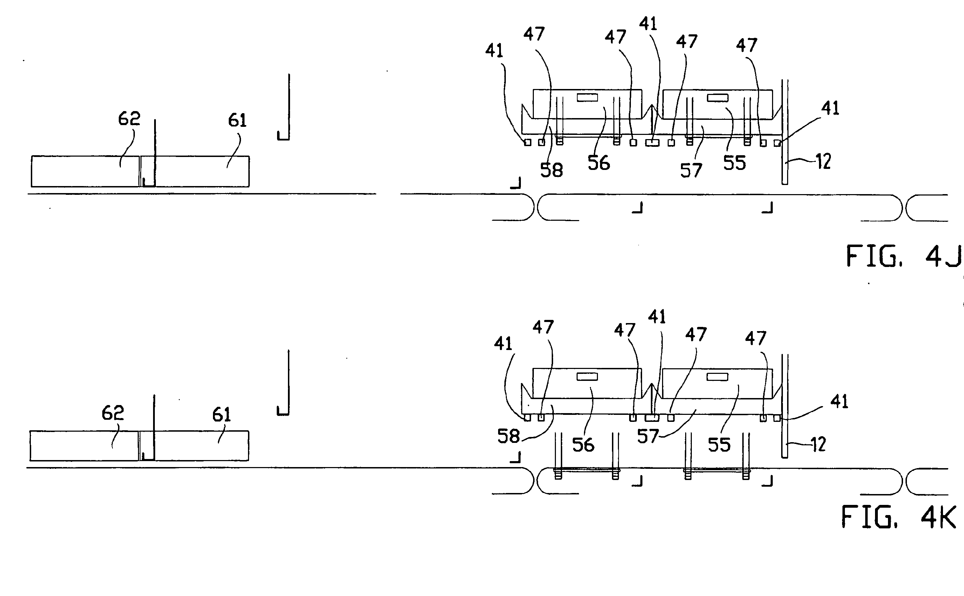

Subsequently, as shown in figure 4J, the lifting arms 16 are moved from their lowermost position to their uppermost position as a result of which the first and second crate 55, 56 are lifted in longitudinal direction out of the active transversal supports 19 by the third and fourth crate, respectively, and two stacks 27 of two crates are formed. Subsequently the transversal supports 19 are hinged to their inactive position and the longitudinal supports 18 are hinged from their inactive position to their active position, after which the third and fourth crate 57, 58 are taken over and held by the longitudinal supports when the lifting arms 16 according to figure 4K move to their lowermost position after which a new lifting cycle can be started.

When the stacks of crates are high enough they are lifted by means of the lifting arms 16 from the active longitudinal or transversal supports 18, 19 and placed on the second conveyor belts 6, after which they can be discharged after opening the doors 11 of the stacking and unstacking section 5 to the supply and discharge section 7 for stacks of crates.

When unstacking a stack of crates the steps discussed above are carried out in reversed order, in which the stoppers are not active.

A crate orienter can be provided in the supply and discharge section 3 for individual crates, which orienter brings the crates on the first conveyor belt 4 in the desired longitudinal or transversal direction, and optionally having an ejector for incorrectly oriented crates.

Two devices 1 can be accommodated in a processing street, wherein the first device unstacks stacks of crates, the second device stacks the crates, and between unstacking and stacking a treatment is carried out on the crates, for instance rinsing, wherein the orientation of the crates in the processing street is maintained for stacking.

## Claims

1. Device (1) for stacking and/or unstacking elongated crates (28) into and/or from at least one stack of cross-wise alternately stacked crates (28) at a first position, comprising a station (5) for all the bottom side of the stack stacking and /or unstacking crates (28) and conveying means (4, 6) for per stack alternately in longitudinal direction or transversal direction supplying and/or discharging crates (28) from and/or towards the station (5)

2. Device (1) according to claim 1, wherein the station (5) comprises first crate carrying means (6) for in the station (5) carrying crates supplied and/or to be discharged by the conveying means (5, 6), and second crate carrying means (16) which are movable from and towards the first crate carrying means (6) in a direction (17) that is transverse to a supply and discharge direction (9) of the conveying means (6).

3. Device (1) according to claim 2, wherein the station (5) comprises third crate carrying means (18, 19) for in stacking direction carrying a crate (28) at at least the distance equalling the height of one crate wall (31) with respect to a crate (28) carried by the first crate carrying means (6), wherein the second (16) and third (18, 19) carrying means preferably are adapted for transferring crates (28) one to the other, wherein preferably the second crate (16) carrying means can be moved up and down from and towards the first (6) and third (18, 19) crate carrying means.

4. Device (1) according to claim 2 or 3, wherein the second crate carrying means (16) comprise first and second engagement (36, 37) means for engagement along a longitudinal side and transverse side, respectively, of a crate (28), wherein the second and third engagement means preferably are formed on a same body.

5. Device (1) according to claim 3 or 4, wherein the third crate carrying means (18, 19) comprise third and fourth engagement means (41, 47) for engagement along a longitudinal and transverse side, respectively, of a crate.

6. Device (1) according to claim 4 or 5, wherein the first and/or second and/or third and/or fourth engagement means (36, 37, 41, 47) comprise a support for abutting a circumferential edge along the bottom (29) of a crate (28), wherein the support preferably is angular having a first and a second wall (41, 42) that merges therewith, which are at a first angle of 90-110 degrees, wherein in the crate carrying condition of the angular support the first wall (41) abuts a bottom of a crate and the second wall (42) is substantially opposite a side wall of the crate, wherein preferably the second wall at a side opposite the first wall merges into a third wall, wherein with respect to the first wall (41) the third wall (42) is at a second angle that is larger than the first angle.

7. Device (1) according to claim 5 or 6, wherein the third engagement means (41) comprise at least two spaced apart supports (41) for abutting along the same longitudinal side of a crate (28), wherein the largest mutual distance between the supports (47) is larger than the width of a crate (28) and is smaller than the length of the crate (28).

8. Device (1) according to any one of the claims 4-7, wherein the fourth engagement means (47) comprise at least two spaced apart supports (47) for abutting along the same transverse side of a crate (28), wherein the largest mutual distance between the supports is smaller than the width of the crate (28).

9. Device (1) according to any one of the claims 4-8, wherein the second crate carrying means (16) comprise first positioning means for independent from each other alternately in an engagement direction transverse to the stacking/unstacking direction (17) moving the first and second engagement means (36, 37), respectively, from and towards a position enabling to carry a crate.

10. Device (1) according to any one of the claims 3-9, comprising a frame (2), wherein the second crate carrying means (16) are disposed at a lifting frame (34) that is movable in stacking/unstacking direction with respect to the frame (2), wherein the first and second engagement means (36, 37) are provided at first arms (16) that are attached to the lifting frame (34) on either side with respect to the stacking/unstacking position of the device (1), such that the first and second engagement means (36, 37), respectively, are each able to mutually engage on either side of a crate onto the longitudinal sides and transverse sides, respectively, of a crate, wherein preferably the first and second engagement means (36, 37) are attached to the first arms (16) in pairs and in a stepped manner, wherein the device (1) preferably comprises first drive means (24) for moving the lifting frame (34) with respect to the frame (2), wherein the first drive means preferably comprise a stepping motor (24).

11. Device (1) according to any one of the claims 5-10, wherein the third crate carrying (18, 19) means comprise second and third positioning means for independent from each other alternately moving the third and fourth engagement means (41, 47), respectively, in an engagement direction transverse to the stacking direction (17) from and towards a position enabling to carry crates, wherein preferably the second and third positioning means comprise second and third arms to which at an end the third and fourth engagement means (41, 47), respectively, have been provided, wherein at an end opposite the engagement means (41, 47) the second and third arms are connected to the frame (2) so as to swing for swinging transverse to the supply and discharge direction (9), wherein the stacking device preferably comprises second and third drive means (44, 49) for the second and third arms, wherein the second and third drive means preferably comprise a pneumatic or hydraulic drive cylinder (44, 49).

12. Device (1) according to any one of the preceding claims, wherein the station (5) comprises first pillar guides (12, 54) extending in stacking/unstacking direction (17) for abutting on and substantially around a stack of crates if present in the station, wherein the first pillar guides (54) preferably are positioned for abutment along a transverse side of a crate in a stack of crates in the station, wherein the first pillar guides preferably comprise elongated bars (12, 54) extending in the stack direction, wherein preferably at least a number of first pillar guides (12) are swingable or movable from and towards an abutting position, wherein the device preferably comprises a door (11) which at a supply and discharge side of the device gives access to the station, wherein preferably at least a number of first pillar guides (12) have been disposed at the door (11).

13. Device (1) according to any one of the preceding claims, wherein the conveying means (4, 6) comprise a conveyance path (6) having a first and second stopper (12, 21) for at the first position stopping a crate (28) supplied to the station in the longitudinal direction or transversal direction, respectively, over the conveyance path.

14. Device (1) according to claim 12 or 13, wherein the first stopper (12) is provided by the first pillar guides (12) provided at the door (11) of the device (1).

15. Device (1) according to any one of the claims 12-14, wherein the conveyance path comprises a third stopper (23) for at a first stand-by position spaced apart from the first position stopping a crate (28) supplied to the station in longitudinal direction or transversal direction over the conveyance path, wherein the conveyance path preferably comprises a fourth stopper (59) for stopping a supplied crate at a buffer position spaced apart from the first stand-by position.

16. Device (1) according to any one of the claims 12-15, comprising centring means (10) for centring crates transverse to the supply direction, which crates are supplied to the station (5) in longitudinal direction or transverse direction, respectively, and which crates are on the conveyance path (9) in line with the position enabling to carry crates of the first and/or second crate carrying means (6, 16), wherein the centring means preferably comprise second pillar guides (10) for abutting opposite side walls of a crate, wherein the second pillar guides (10) are situated parallel to the supply direction (9), wherein the second pillar guides (10) preferably are provided for abutting a side wall at the longitudinal side of a crate, wherein the centring means further comprise third pillar guides for abutting opposite side walls at the transverse side of a crate, wherein the third pillar guides are situated parallel to the supply direction, wherein the second and/or third pillar guides preferably are movable transverse to the supply direction for bringing the second and/or third pillar guides in abuttable position, wherein the second pillar guides (10) preferably are movable transverse to the supply direction for bringing the second pillar guides (10) in abuttable position, and wherein the third pillar guides are fixedly connected to the frame of the device.

17. Device (1) according to any one of the claims 13-16, wherein the conveyance path provides the first crate carrying means (4, 6).

18. Device (1) according to any one of the claims 13-17, wherein the conveyance path comprises a conveyor belt (6).

19. Device (1) according to any one of the preceding claims, wherein the conveying means (4, 6) are provided with a crate orienter for per stack supplying crates (28) alternately in longitudinal direction or transversal direction.

20. Device (1) according to any one of the preceding claims, wherein the conveying means (4, 6) comprise an ejector for ejecting incorrectly oriented crates from the conveying device and preferably returning them reoriented.

21. Device (1) according to any one of the preceding claims, wherein the station (5) is adapted for the at the first position and at an adjacent second position parallel stacking and/or unstacking of two stacks of cross-wise and alternately stacked crates (28).

22. Device (1) according to claim 21 and any one of the claims 13-20, comprising a fifth stopper (22) for at the second position stopping a crate supplied to the station in the transversal direction over the conveyance path, wherein the device (1) preferably comprises a sixth stopper (60) for at a second stand-by position spaced apart from the first stand-by position stopping a crate supplied in longitudinal direction or transversal direction over the conveyance path, wherein the first and/or second and/or third and/or fourth and/or fifth and/or sixth stopper (12, 21, 23, 59, 22, 60) preferably comprise an angular profile for abutting a circumferential edge along the bottom of a crate, wherein the profile is movable with respect to the conveyor belt (6) from and towards an abuttable position.

23. Device (1) according to any one of the preceding claims, comprising an operating device for operating the drive means (24, 44 49) of the device in a controlled manner.

## Patentansprüche

1. Vorrichtung zum Stapeln und/oder Entstapeln länglicher Kisten (28) auf und/oder von wenigstens einem Stapel kreuzweise abwechselnd gestapelter Kisten (28) an einer ersten Position, umfassend eine Station (5) zum Stapeln und/oder Entstapeln von Kisten (28) an der Unterseite des Stapels und Fördermittel (4, 6), um pro Stapel alternierend in Längsrichtung oder Querrichtung Kisten (28) von und/oder zu der Station (5) abzuführen und/oder zuzuführen.

2. Vorrichtung (1) nach Anspruch 1, wobei die Station (5) erste Kistentragemittel (6) umfasst, um an der Station (5) Kisten zu tragen, die durch das Fördermittel (5, 6) zugeführt und/oder abgeführt werden, und zweite Kistentragemittel (16) umfasst, welche von den ersten Kistentragemitteln (6) weg und zu ihm hin in einer Richtung (17) bewegbar sind, die quer zu einer Zufuhr- und Abfuhrrichtung (9) des Fördermittels (6) ist.

3. Vorrichtung (1) nach Anspruch 2, wobei die Station (5) dritte Kistentragemittel (18, 19) umfasst, um eine Kiste (28) in Stapelrichtung mit wenigstens dem Abstand zu einer von den ersten Kistentragemitteln (6) getragenen Kiste (28) zu tragen, der der Höhe einer Kistenwand (31) entspricht, wobei die zweiten (16) und dritten (18, 19) Tragemittel vorzugsweise dazu ausgebildet sind, Kisten (28) von einem zum anderen zu überführen, wobei vorzugsweise die zweiten Kistentragemittel (16) weg von und hin zu den ersten (6) und dritten (18, 19) Kistentragemitteln auf und ab bewegt werden können.

4. Vorrichtung (1) nach Anspruch 2 oder 3, wobei die zweiten Kistentragemittel (16) erste und zweite Eingreifmittel (36, 37) für den Angriff entlang einer Längsseite beziehungsweise Querseite einer Kiste (28) umfassen, wobei die zweiten und dritten Eingreifmittel vorzugsweise an demselben Körper gebildet sind.

5. Vorrichtung (1) nach Anspruch 3 oder 4, wobei die dritten Kistentragemittel (18, 19) dritte und vierte Eingreifmittel (41, 47) für das Angreifen entlang einer Längsseite beziehungsweise Querseite einer Kiste (28) umfassen.

6. Vorrichtung (1) nach Anspruch 4 oder 5, wobei die ersten und/oder zweiten und/oder dritten und/oder vierten Eingreifmittel (36, 37, 41, 47) eine Stütze zum Anliegen an einer Umfangskante entlang dem Boden (29) einer Kiste (28) umfassen, wobei die Stütze vorzugsweise winklig ist und eine erste und eine zweite Wand (41, 42) umfasst, die ineinander übergehen und die einen ersten Winkel von 90-110 Grad aufweisen, wobei in dem Kistentragezustand der Winkelstütze die erste Wand (41) an einem Boden der Kiste anliegt und die zweite Wand (42) im Wesentlichen gegenüber einer Seitenwand der Kiste liegt, wobei vorzugsweise die zweite Wand an einer Seite gegenüber der ersten Wand in eine dritte Wand übergeht, wobei sich bezüglich der ersten Wand (41) die dritte Wand (42) in einem zweiten Winkel befindet, der größer ist als der erste Winkel.

7. Vorrichtung (1) nach Anspruch 5 oder 6, wobei die dritten Eingreifmittel (41) wenigstens zwei beabstandete Stützen (41) zum Anliegen entlang derselben Längsseite einer Kiste (28) umfassen, wobei der größte Abstand der Stützen (47) zueinander größer als die Breite einer Kiste (28) und kleiner als die Länge einer Kiste (28) ist.

8. Vorrichtung (1) nach einem der Ansprüche 4-7, wobei die vierten Eingreifmittel (47) wenigstens zwei beabstandete Stützen (47) zum Anliegen entlang derselben Querseite einer Kiste (28) umfassen, wobei der größte Abstand der Stützen zueinander kleiner als die Breite der Kiste (28) ist.

9. Vorrichtung (1) nach einem der Ansprüche 4-8, wobei die zweiten Kistentragemittel (16) erste Positionierungsmittel umfassen, um die ersten beziehungsweise die zweiten Eingreifmittel (36, 37) unabhängig voneinander alternierend in einer Eingriffrichtung quer zu der Stapel/Entstapelrichtung (17) weg von und zu einer Position zu bewegen, welche es ermöglicht, eine Kiste zu tragen.

10. Vorrichtung (1) nach einem der Ansprüche 3-9, umfassend einen Rahmen (2), wobei die zweiten Kistentragemittel (16) an einem Heberahmen (34) angeordnet sind, welcher in Stapel/Entstapelrichtung bezüglich des Rahmens (2) beweglich ist, wobei die ersten und zweiten Eingreifmittel (36, 37) an ersten Armen (16) vorgesehen sind, welche an dem Heberahmen (34) an beiden Seiten bezüglich der Stapel/Entstapelposition der Vorrichtung (1) befestigt sind, sodass die ersten beziehungsweise zweiten Eingreifmittel (36, 37) jeweils in der Lage sind, zueinander an beiden Seiten einer Kiste an den Längsseiten beziehungsweise Querseiten einer Kiste anzugreifen, wobei vorzugsweise die ersten und zweiten Eingreifmittel (36, 37) an den ersten Armen (16) paarweise und gestuft befestigt sind, wobei die Vorrichtung (1) vorzugsweise erste Antriebsmittel (24) umfasst, um den Heberahmen (34) bezüglich des Rahmens (2) zu bewegen, wobei das erste Antriebsmittel vorzugsweise einen Schrittmotor (24) umfasst.

11. Vorrichtung (1) nach einem der Ansprüche 5-10, wobei die dritten Kistentragemittel (18, 19) zweite und dritte Positionierungsmittel umfassen, um unabhängig voneinander alternierend die dritten beziehungsweise vierten Eingreifmittel (41, 47) in einer Eingreifrichtung quer zu der Stapelrichtung (17) weg von und zu einer Position zu bewegen, welche es ermöglicht, eine Kiste zu tragen, wobei vorzugsweise die zweiten und dritten Positionierungsmittel zweite und dritte Arme umfassen, an welchen an einem Ende die dritten beziehungsweise vierten Eingreifmittel (41, 47) vorgesehen sind, wobei die zweiten und dritten Arme an einem Ende gegenüber den Eingreifmitteln (41, 47) mit dem Rahmen (2) zum Schwenken verbunden sind, um quer zu der Zufuhr- und Abfuhrrichtung (9) zu schwenken, wobei die Stapelvorrichtung vorzugsweise zweite und dritte Antriebsmittel (44, 49) für die zweiten und dritten Arme umfasst, wobei die zweiten und dritten Antriebsmittel vorzugsweise einen pneumatischen oder hydraulischen Antriebszylinder (44, 49) umfassen.

12. Vorrichtung (1) nach einem der vorangehenden Ansprüche, wobei die Station (5) erste Säulenführungen (12, 54) umfasst, welche sich in Stapel/Entstapelrichtung (17) erstrecken, zum Anliegen an und im Wesentlichen um einen Kistenstapel, wenn in der Station vorhanden, wobei die ersten Säulenführungen (54) vorzugsweise für Anliegen entlang einer Querseite einer Kiste in einem Kistenstapel in der Station positioniert sind, wobei die ersten Säulenführungen vorzugsweise längliche Stangen (12, 54) umfassen, welche sich in der Stapelrichtung erstrecken, wobei vorzugsweise wenigstens eine Anzahl erster Säulenführungen (12) weg von und zu einer Anlageposition schwenkbar oder bewegbar ist, wobei die Vorrichtung vorzugsweise eine Tür (11) umfasst, welche auf einer Zufuhr- und Abfuhrseite der Vorrichtung den Zugang zu der Station ermöglicht, wobei vorzugsweise wenigstens eine Anzahl erster Säulenführungen (12) an der Tür (11) angeordnet sind.

13. Vorrichtung (1) nach einem der vorangehenden Ansprüche, wobei die Fördermittel (4, 6) eine Förderbahn (6) umfassen, umfassend einen ersten und zweiten Anschlag (12, 21), um an der ersten Position eine der Station zugeführte Kiste (28) in der Längsrichtung beziehungsweise in der Querrichtung über die Förderbahn zu stoppen.

14. Vorrichtung (1) nach Anspruch 12 oder 13, wobei der erste Anschlag (12) durch die an der Tür (11) der Vorrichtung vorgesehenen ersten Säulenführungen (12) vorgesehen ist.

15. Vorrichtung (1) nach einem der Ansprüche 12-14, wobei die Förderbahn einen dritten Anschlag (23) aufweist, um an einer zu der ersten Position beabstandeten ersten Ersatzposition zugeführte Kiste (28) in der Längsrichtung beziehungsweise in der Querrichtung zur Förderbahn zu stoppen, wobei die Förderbahn vorzugsweise einen vierten Anschlag (59) zum Stoppen einer zugeführten Kiste an einer zu der ersten Ersatzposition beabstandeten Pufferposition umfasst.

16. Vorrichtung (1) nach einem der Ansprüche 12-15, umfassend Zentrierungsmittel (10) zum Zentrieren von Kisten quer zur Zufuhrrichtung, wobei die Kisten der Station (5) in Längsrichtung beziehungsweise Querrichtung zugeführt werden und wobei die Kisten sich auf der Förderbahn (9) in Reihe mit der Position befinden, welche es ermöglicht, Kisten des ersten und/oder zweiten Kistentragemittels (6, 16) zu tragen, wobei die Zentrierungsmittel vorzugsweise zweite Säulenführungen (10) zum Anliegen an gegenüberliegenden Wänden einer Kiste umfassen, wobei die zweiten Säulenführungen (10) parallel zur Zufuhrrichtung (9) angeordnet sind, wobei die zweiten Säulenführungen (10) vorzugsweise zum Anliegen an einer Seitenwand an der Längsseite einer Kiste vorgesehen sind, wobei die Zentrierungsmittel ferner dritte Säulenführungen zum Anliegen an gegenüberliegenden Seitenwänden an der Querseite einer Kiste umfassen, wobei die dritten Säulenführungen parallel zu der Zufuhrrichtung angeordnet sind, wobei die zweiten und/oder dritten Säulenführungen vorzugsweise quer zu der Zufuhrrichtung bewegbar sind, um die zweiten und/oder die dritten Säulenführungen in eine Anlageposition zu bringen, wobei die zweiten Säulenführungen (10) vorzugsweise quer zu der Zufuhrrichtung bewegbar sind, um die zweiten Säulenführungen (10) in eine Anlageposition zu bringen, und wobei die dritten Säulenführungen fest mit dem Rahmen der Vorrichtung verbunden sind.

17. Vorrichtung (1) nach einem der Ansprüche 13-16, wobei die Förderbahn die ersten Kistentragemittel (4, 6) vorsieht.

18. Vorrichtung (1) nach einem der Ansprüche 13-17, wobei die Förderbahn ein Förderband (6) umfasst.

19. Vorrichtung (1) nach einem der vorangehenden Ansprüche, wobei die Fördermittel (4, 6) mit einem Kistenausrichter versehen sind, um pro Stapel Kisten (28) alternierend in Längsrichtung oder Querrichtung zuzuführen.

20. Vorrichtung (1) nach einem der vorangehenden Ansprüche, wobei die Fördermittel (4, 6) einen Ausstoßer umfassen, um nicht korrekt ausgerichtete Kisten aus der Fördervorrichtung auszustoßen und vorzugsweise neu ausgerichtet zurückzuführen.

21. Vorrichtung (1) nach einem der vorangehenden Ansprüche, wobei die Station (5) dafür ausgebildet ist, an der ersten Position und an einer benachbarten zweiten Position zwei Stapel kreuzweise und alternierend gestapelter Kisten (28) parallel zu stapeln und/oder zu entstapeln.

22. Vorrichtung nach Anspruch 21 und einem der Ansprüche 13-20, umfassend einen fünften Anschlag (22), um an einer zweiten Position eine Kiste zu stoppen, die der Station in der Querrichtung über die Förderbahn zugeführt worden ist, wobei die Vorrichtung (1) vorzugsweise einen sechsten Anschlag (60) umfasst, um an einer zur ersten Ersatzposition beabstandeten zweiten Ersatzposition eine Kiste zu stoppen, die in Längsrichtung oder Querrichtung über die Förderbahn zugeführt ist, wobei der erste und/oder zweite und/oder dritte und/oder vierte und/oder fünfte und/oder sechste Anschlag (12, 21, 23, 59, 22, 60) vorzugsweise ein Winkelprofil umfassen, um an einer Umfangskante entlang dem Boden einer Kiste anzuliegen, wobei das Profil bezüglich des Förderbands (6) weg von und hin zu einer Anlageposition bewegbar ist.

23. Vorrichtung (1) nach einem der vorangehenden Ansprüche, umfassend eine Bedienvorrichtung zum Bedienen der Antriebsmittel (24, 44, 49) der Vorrichtung auf eine gesteuerte Weise.

## Revendications

1. Dispositif (1) destiné à empiler et/ou à désempiler des caisses (28) allongées (28) à l'intérieur de et/ou depuis au moins une pile de caisses (28) empilées en alternance en diagonale dans une première position, comprenant un poste (5) pour tout le côté inférieur de la pile empilant et/ou désempilant les caisses (28) et des moyens de transport (4, 6) destinés à fournir et/ou décharger par pile en alternance dans la direction longitudinale ou la direction transversale des caisses (28) depuis et/ou en direction du poste (5).

2. Dispositif (1) selon la revendication 1, dans lequel le poste (5) comprend des premiers moyens de port de caisse (6) destinés, dans le poste (5), à porter les caisses fournies et/ou à décharger par les moyens de transport (5, 6), et des deuxièmes moyens de port de caisse (16) qui sont mobiles depuis et en direction des premiers moyens de port de caisse (6) dans une direction (17) qui est transversale à une direction de fourniture et de déchargement (9) des moyens de transport (6).

3. Dispositif (1) selon la revendication 2, dans lequel le poste (5) comprend des troisièmes moyens de port de caisse (18, 19) destinés à porter une caisse (28) dans la direction d'empilage suivant au moins la distance égalant la hauteur d'une paroi de caisse (31) par rapport à une caisse (28) portée par les premiers moyens de port de caisse (6), dans lequel les deuxièmes (16) et troisièmes moyens de port (18, 19) sont adaptés de préférence pour transférer les caisses (28) les unes sur les autres, dans lequel de préférence les deuxièmes moyens de port de caisse (16) peuvent être déplacés vers le haut et vers le bas depuis et en direction des premiers (6) et troisièmes moyens de port de caisse (18, 19).

4. Dispositif (1) selon la revendication 2 ou 3, dans lequel les deuxièmes moyens de port de caisse (16) comprennent des premiers et deuxièmes moyens de mise en prise (36, 37) destinés à une mise en prise le long d'un côté longitudinal et d'un côté transversal, respectivement, d'une caisse (28), dans lequel les deuxièmes et troisièmes moyens de mise en prise sont formés de préférence sur un même corps.

5. Dispositif (1) selon la revendication 3 ou 4, dans lequel les troisièmes moyens de port de caisse (18, 19) comprennent des troisièmes et quatrièmes moyens de mise en prise (41, 47) destinés à une mise en prise le long d'un côté longitudinal et transversal, respectivement, d'une caisse.

6. Dispositif (1) selon la revendication 4 ou 5, dans lequel les premiers et/ou deuxièmes et/ou troisièmes et/ou quatrièmes moyens de mise en prise (36, 37, 41, 47) comprennent un support destiné à venir en butée contre un bord circonférentiel le long du fond (29) d'une caisse (28), dans lequel le support est de préférence angulaire et présente une première paroi et une deuxième paroi (41, 42) qui rejoint celle-ci, qui se situent suivant un premier angle de 90-110 degrés, dans lequel dans l'état de port de la caisse du support angulaire la première paroi (41) vient en butée contre un fond d'une caisse et la deuxième paroi (42) est sensiblement opposée à une paroi latérale de la caisse, dans lequel de préférence la deuxième paroi au niveau d'un côté opposé à la première paroi rejoint une troisième paroi, dans lequel par rapport à la première paroi (41), la troisième paroi (42) se situe suivant un second angle qui est supérieur au premier angle.

7. Dispositif (1) selon la revendication 5 ou 6, dans lequel les troisièmes moyens de mise en prise (41) comprennent au moins deux supports (41) espacés l'un de l'autre destinés à venir en butée le long du même côté longitudinal d'une caisse (28), dans lequel la plus grande distance mutuelle entre les supports (47) est supérieure à la largeur d'une caisse (28) et est inférieure à la longueur de la caisse (28).

8. Dispositif (1) selon l'une quelconque des revendications 4 à 7, dans lequel les quatrièmes moyens de mise en prise (47) comprennent au moins deux supports (47) espacés l'un de l'autre destinés à venir en butée le long du même côté transversal d'une caisse (28), dans lequel la plus grande distance mutuelle entre les supports est inférieure à la largeur de la caisse (28).

9. Dispositif (1) selon l'une quelconque des revendications 4 à 8, dans lequel les deuxièmes moyens de port de caisse (26) comprennent des premiers moyens de positionnement destinés à déplacer, indépendamment l'un de l'autre en alternance dans une direction de mise en prise transversale à la direction d'empilage/de désempilage (17), les premiers et deuxièmes moyens de mise en prise (36, 37), respectivement, depuis et en direction d'une position permettant de porter une caisse.

10. Dispositif (1) selon l'une quelconque des revendications 3 à 9, comprenant un châssis (2), dans lequel les deuxièmes moyens de port de caisse (16) sont disposés au niveau d'un châssis de levage (34) qui est mobile dans une direction d'empilage/de désempilage par rapport au châssis (2), dans lequel les premiers et deuxièmes moyens de mise en prise (36, 37) sont prévus au niveau des premiers bras (16) qui sont fixés au châssis de levage (34) sur chaque côté par rapport à la position d'empilage/de désempilage du dispositif (1), de telle sorte que les premiers et deuxièmes moyens de mise en prise (36, 37), respectivement, sont chacun aptes à se mettre en prise mutuellement sur chaque côté d'une caisse sur les côtés longitudinaux et les côtés transversaux, respectivement, d'une caisse, dans lequel de préférence les premiers et deuxièmes moyens de mise en prise (36, 37) sont fixés aux premiers bras (16) par paires et de manière étagée, dans lequel le dispositif (1) comprend de préférence des premiers moyens d'entraînement (24) destinés à déplacer le châssis de levage (34) par rapport au châssis (2), dans lequel les premiers moyens d'entraînement comprennent de préférence un moteur pas à pas (24).

11. Dispositif (1) selon l'une quelconque des revendications 5 à 10, dans lequel les troisièmes moyens de port de caisse (18, 19) comprennent des deuxièmes et troisièmes moyens de positionnement destinés à déplacer en alternance, indépendamment les uns des autres, les troisièmes et quatrièmes moyens de mise en prise (41, 47), respectivement, dans une direction de mise en prise transversale à la direction d'empilage (17) depuis et en direction d'une position permettant de porter les caisses, dans lequel de préférence les deuxièmes et troisièmes moyens de positionnement comprennent des deuxième et troisièmes bras auxquels à une extrémité les troisièmes et quatrièmes moyens de mise en prise (41, 47), respectivement, ont été prévus, dans lequel à une extrémité opposée aux moyens de mise en prise (41, 47), les deuxièmes et troisièmes bras sont raccordés au châssis (2) de manière à osciller pour osciller transversalement à la direction de fourniture et de déchargement (9), dans lequel le dispositif d'empilage comprend de préférence des deuxièmes et troisièmes moyens d'entraînement (44, 49) pour les deuxième et troisième bras, dans lequel les deuxièmes et troisièmes moyens d'entraînement comprennent de préférence un cylindre d'entraînement pneumatique ou hydraulique (44, 49).

12. Dispositif (1) selon l'une quelconque des revendications précédentes, dans lequel le poste (5) comprend des premiers guides de pilier (12, 54) s'étendant dans la direction d'empilage/de désempilage (17) pour venir en butée sur et sensiblement autour d'une pile de caisses si elles sont présentes dans le poste, dans lequel les premiers guides de pilier (54) sont positionnés de préférence pour venir en butée le long d'un côté transversal d'une caisse dans une pile de caisses dans le poste, dans lequel les premiers guides de pilier comprennent de préférence des barres allongées (12, 54) s'étendant dans la direction d'empilage, dans lequel de préférence au moins un certain nombre de premier guides de pilier (12) peuvent osciller ou se déplacer depuis et en direction d'une position de butée, dans lequel le dispositif comprend de préférence une porte (11) qui, au niveau d'un côté de fourniture et de déchargement du dispositif, donne accès au poste, dans lequel de préférence au moins un certain nombre de premiers guides de pilier (12) ont été disposés au niveau de la porte (11).

13. Dispositif (1) selon l'une quelconque des revendications précédentes, dans lequel les moyens de transport (4, 6) comprennent un trajet de transport (6) présentant une première et une deuxième butées (12, 21) destinées, dans la première position, à arrêter une caisse (28) fournie au poste dans la direction longitudinale ou la direction transversale, respectivement, au-dessus du trajet de transport.

14. Dispositif (1) selon la revendication 12 ou 13, dans lequel la première butée (12) est fournie par les premiers guides de pilier (12) prévus au niveau de la porte (11) du dispositif (1) .

15. Dispositif (1) selon l'une quelconque des revendications 12 à 14, dans lequel le trajet de transport comprend une troisième butée (23) destinée, dans une première position d'attente espacée de la première position, à arrêter une caisse (28) fournie au poste dans la direction longitudinale ou la direction transversale au-dessus du trajet de transport, dans lequel le trajet de transport comprend de préférence une quatrième butée (59) destinée à arrêter une caisse fournie dans une position tampon espacée de la première position d'attente.

16. Dispositif (1) selon l'une quelconque des revendications 12 à 15, comprenant des moyens de centrage (10) destinés à centrer les caisses transversalement à la direction de fourniture, lesquelles caisses sont fournies au poste (5) dans la direction longitudinale ou la direction transversale, respectivement, et lesquelles caisses se situent sur le trajet de port (9) en étant alignées sur la position permettant de transporter les caisses des premiers et/ou deuxièmes moyens de port de caisse (6, 16), dans lequel les moyens de centrage comprennent de préférence des deuxièmes guides de pilier (10) destinés à venir en butée contre les parois latérales opposées d'une caisse, dans lequel les seconds guides de pilier (10) sont situés parallèlement à la direction de fourniture (9), dans lequel les seconds guides de pilier (10) sont prévus de préférence pour venir en butée contre une paroi latérale au niveau du côté longitudinal d'une caisse, dans lequel les moyens de centrage comprennent en outre des troisièmes guides de pilier destinés à venir en butée contre les parois latérales opposées au niveau du côté transversal d'une caisse, dans lequel les troisièmes guides de pilier sont situés parallèlement à la direction de fourniture, dans lequel les deuxièmes et/ou troisièmes guides de pilier sont de préférence mobiles transversalement à la direction de fourniture pour amener les deuxièmes et/ou troisièmes guides de pilier dans une position susceptible d'être mise en butée, dans lequel les deuxièmes guides de pilier (10) sont de préférence mobiles transversalement à la direction de fourniture pour amener les deuxièmes guides de pilier (10) dans une position susceptible d'être mise en butée, et dans lequel les troisièmes guides de pilier sont raccordés fixement au châssis du dispositif.

17. Dispositif (1) selon l'une quelconque des revendications 13 à 16, dans lequel le trajet de transport fournit les premiers moyens de port de caisse (4, 6).

18. Dispositif (1) selon l'une quelconque des revendications 13 à 17, dans lequel le trajet de transport comprend une courroie de transport (6) .

19. Dispositif (1) selon l'une quelconque des revendications précédentes, dans lequel les moyens de transport (4, 6) sont pourvus d'un dispositif d'orientation de caisse destiné à fournir par pile les caisses (28) en alternance dans la direction longitudinale ou la direction transversale.

20. Dispositif (1) selon l'une quelconque des revendications précédentes, dans lequel les moyens de transport (4, 6) comprennent un éjecteur destiné à éjecter les caisses mal orientées du dispositif de transport et à les renvoyer de préférence réorientées.

21. Dispositif (1) selon l'une quelconque des revendications précédentes, dans lequel le poste (5) est adapté pour empiler et/ou désempiler en parallèle, dans la première position et une seconde position adjacente, deux piles de caisses (28) empilées en diagonale et en alternance.

22. Dispositif (1) selon la revendication 21 et selon l'une quelconque des revendications 13 à 20, comprenant une cinquième butée (22) destinée à arrêter dans la seconde position une caisse fournie au poste dans la direction transversale au-dessus du trajet de transport, dans lequel le dispositif (1) comprend de préférence une sixième butée (60) destinée, dans une seconde position d'attente espacée de la première position d'attente, à arrêter une caisse fournie dans la direction longitudinale ou la direction transversale au-dessus du trajet de transport, dans lequel les première et/ou deuxième et/ou troisième et/ou quatrième et/ou cinquième et/ou sixième butées (12, 21, 23, 59, 22, 60) comprennent de préférence un profilé angulaire destiné à se venir en butée contre un bord circonférentiel le long du fond d'une caisse, dans lequel le profilé est mobile par rapport à la courroie de transport (6) depuis et en direction d'une position susceptible d'être mise en butée.

23. Dispositif (1) selon l'une quelconque des revendications précédentes, comprenant un dispositif d'actionnement destiné à actionner les moyens d'entraînement (24, 44, 49) du dispositif d'une manière commandée.
